# EUROPEAN PATENT APPLICATION

(11) **EP 0 923 866 A1**
(43) Date of publication of application: **23.06.1999**
(21) Application number: 98310102.3
(22) Date of filing: 09.12.1998
(51) Int. Cl.: A01N 25/34, B65D 81/28

(54) **Improvements in and relating to stretch film packaging**

(30) Priority: 11.12.1997 GB 9726093
(71) Applicant: British Polythene Limited, Greenock PA15 2RP (GB)
(72) Inventor: Solé de la Fuente, Antonio, Ludlow, Shropshire SY8 1ND (GB)
(74) Representative: Higgins, Michael Roger

(57) **Abstract**

A stretch film (2) for ensiling forage or hay to subsequently provide feed for cattle, sheep and horses during winter is provided with a pest deterrent (4) on one side such that on wrapping of a bale of foodstuff by the stretch film with the pest deterrrent outermost the presence of the deterrent substance deters or prevents mechanical damage caused to the stretch film by birds or vermin.

## Description

This invention relates to stretch film packaging particularly, but not exclusively, for use in ensiling forage or hay to subsequently provide feed for cattle, sheep and horses during winter.

Stretch film of a type similar to what is domestically referred to as clingfilm has been used to enclose bales of hay for a number of years, the object being to exclude air and water so that the hay is conserved as silage. The stretch film is typically made from one or several layers of polythene film wound into rolls of, typically, 1500 m in length and 0.75m wide. These stretch film rolls are then mounted onto special bale winding machines whereby a bale of hay or forage material is then automatically over-wrapped with, typically, four to six layers of the stretch film to produce a generally water and airtight wrapping, whereafter the bale can then be removed from the winding machine and either stored indoors for subsequent use or stored outdoors until required for winter feed.

This method of ensiling bales of grass or other forage is becoming increasingly popular but suffers from an inherent problem relating to birds or vermin. Even with a wrapping of four or six layers of the stretch film nevertheless it is still relatively easy for birds to peck holes therethrough in order to access the interior for, particularly, protein crops such as peas and beans. Similarly, vermin such as rats and mice can relatively easily bite through the film at ground level to gain access to the bale which is then partially eaten, fouled and hence causes a health risk. In addition, the ingress of air into the bale allows bacteria to breed which then causes part or even all of the bale to start to rot and rapidly become unsuitable for consumption by farm animals.

It is an object of the present invention to provide stretch film for packaging bales of foodstuffs, particularly crops such as hay, peas and beans, by which the aforementioned disadvantages are obviated.

According to a first aspect of the invention there is provided a stretch film incorporating or including a pest deterrent substance such that on wrapping of a bale of foodstuff by the stretch film the wrapping deters or prevents mechanical damage caused thereto by birds or vermin as a result of the presence of the deterrent substance.

Conveniently, the deterrent substance may be methyl anthranilate or orthoaminoacetophenone which may initially be diluted in a solvent such as ethanol or propanol prior to being applied to one surface of the stretch film, which itself may typically be a single or multi layer polyethylene film. If a multi layer is used the pest deterrent may be on an inner layer only so as to prevent or inhibit contamination of the bale or other foodstuff.

The diluted deterrent substance is conveniently applied by conventional flexographic or gravure printing techniques although it will be understood that the deterrent could be applied in any other manner such as by spraying or painting.

Although the whole of one side of the stretch film may be coated with the pest deterrent it will also be understood that since stretch film is usually wrapped around a bale several times then a relatively thin but continuous strip containing the pest deterrent on the outer surface deterrent will effectively protect most or all of the external surface of the bale when it is wrapped even where the outermost layer of the stretch film does not have a coating of the pest deterrent to either side of the strip.

The invention in a second aspect comprises the method of extruding or otherwise producing a stretch film to be wound, then prior to winding applying a mixture of a substance comprising a pest deterrent and a solvent to part or all of one surface of the stretch film at a position sufficiently remote from the area where the stretch film is to be wound or rolled so as to permit the solvent to evaporate, and thereafter winding or rolling the stretch film such that on at least part of one side thereof there is a coating of the pest deterrent.

The invention will now be described, by way of example only, with reference to the accompanying drawings in which:
Figure 1 is a perspective view of a bale of hay shown partially wrapped by the stretch film in accordance with the invention, and
Figure 2 is a schematic view showing the method by which the stretch film of Figure 1 is provided with a continuous strip of a pest deterrent on one side thereof.

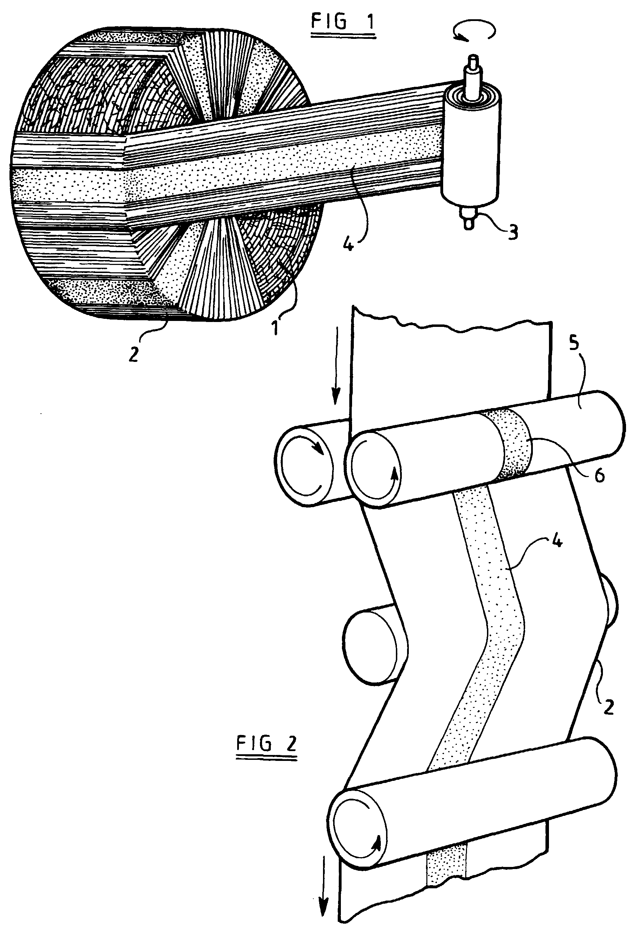

In Figure 1 a conventional bale of hay 1 is shown partially wrapped by means of stretch film 2 unwound from a reel 3 in the direction arrowed. Although this may be done manually, the winding process is more conventionally carried out automatically by placing the bale 1 onto a handling machine (not shown) which supports the reel 3 for rotation under tension and has a central platform onto which the bale is placed and then automatically rotated on vertical and horizontal axes such that one or, typically, several layers of stretch film can be applied to the entire outer surface of the bale 1.

The stretch film 2 is of conventional construction but in accordance with the invention is modified to the extent of having a continuous strip of pest deterrent 4 on one side thereof and applied in the manner as shown and described with reference to Figure 2.

The pest deterrent 4 comprises a thin layer of methyl anthranilate which field trials have shown to be an effective bird or vermin deterrent to the extent that after initial attempts are made to peck or bite through the stretch film birds and vermin quickly learn to seek food elsewhere. It has even been found that populations of birds have learned to associate the plastic film itself with the deterrent so that even untreated stretch film applied to bales of hay or other foodstuffs are left undamaged by the local bird population.

Turning now to Figure 2 there is shown in schematic form the method by which the pest deterrent is applied to one side of the stretch film 2 after manufacture of the film but before it is wound into the reel 3. This is by the simple expedient of a conventional print roller having a generally smooth outer surface apart from a central annular print ring 6 which has a roughened surface such that it can temporarily retain thereon the chosen pest deterrent which can then be transferred to one side of the film 2 to form the continuous strip of pest deterrent 4. To achieve this the chosen pest deterrent, in this instance methyl anthranilate, is mixed with a solvent such as propanol at the rate of one part to seven by volume and the resulting mixture is then fed onto the annular print ring 6 to provide the pest deterrent strip 4. It has been found that a coating weight of the printed area of pest deterrent is ideally 2 grams per sq.m. and in order to permit the solvent to evaporate prior to being wound onto the reel 3, the winding rollers should be a minimum of 1.5m from the print station assuming a line speed not exceeding 100m per minute and a room temperature of 25°C. It will, however, be understood that the distance between the print station and winding rollers will vary according to temperature, speed, and even humidity.

Following the printing process, the layer of pest deterrent remains on one surface of the film 2 after evaporation of the solvent and is trapped between successive layers of wound film until it is exposed by the bale wrapping process. Because the pest deterrent is then on the outside of the bale, or facing outwards in respect of inner layers of the stretch film, it does not contaminate the bale which can thereafter be used for winter feed as necessary. However, the presence of a continuous strip of pest deterrent on the outer or outermost side of the film provides an effective means by which birds and vermin are discouraged from causing mechanical damage to the bale wrapping in order to access the bale.

## Claims

1. A stretch film (2) incorporating or including a pest deterrent substance (4) such that on wrapping of a bale of foodstuff by the stretch film the wrapping deters or prevents mechanical damage caused thereto by birds or vermin as a result of the presence of the deterrent substance.

2. A stretch film according to Claim 1 in which the pest deterrent (4) is provided on one side only of the stretch film (2) such that on wrapping of the bale of foodstuff by the stretch film with the pest deterrent outermost the foodstuff is not contaminated therewith and can thereafter be used for feed whilst the outer surface of the wrapping deters or prevents mechanical damage caused thereto by birds or vermin as a result of the presence of the deterrent substance.

3. A stretch film (2) according to Claim 1 comprised of multiple layers of which an inner layer incorporates or includes a pest deterrent (4).

4. A stretch film (2) according to any preceding claim in which the deterrent substance (4) is methyl anthranilate or ortho-aminoacetophenone.

5. A method of extruding or otherwise producing a stretch film (2) to be wound into a roll, then prior to winding applying a mixture of a substance comprising a pest deterrent (4) and a solvent to part or all of one surface of the stretch film at a position sufficiently remote from the area where the stretch film is to be wound or rolled so as to permit the solvent to evaporate prior to winding, and thereafter winding or rolling the stretch film such that on at least part of one side thereof there is a coating of the pest deterrent.

6. A method according to Claim 5 in which the pest deterrent substance (4) is methyl anthranilate or ortho-aminoacetophenone.

7. A method according to Claim 5 in which the solvent is propanol.
